# FASCICULE DE BREVET EUROPEEN

(11) **EP 0 851 785 B1**
(45) Date de publication et mention de la délivrance du brevet: **04.06.2003**
(21) Numéro de dépôt: 97901685.4
(22) Date de dépôt: 28.01.1997
(51) Int. Cl.: B01D 45/08, B01D 51/02, B01D 50/00, B01D 45/04, B01D 21/00

(54) **DISPOSITIF ET PROCEDE POUR AGGLOMERER ET PRECIPITER DES PARTICULES CONTENUES DANS UN COURANT DE GAZ**
VORRICHTUNG UND VERFAHREN ZUM AGGLOMERIEREN UND ABSCHEIDEN VON PARTIKELN IN EINEM GASSTROM
DEVICE AND METHOD FOR AGGLOMERATING AND PRECIPITATING PARTICLES IN A GAS STREAM

(30) Priorité: 31.01.1996 CA 2168486
(43) Date de publication de la demande: 08.07.1998
(73) Titulaire: Institut Francais du Petrole, 92852 Rueil-Malmaison Cedex (FR); Dullien, Fancis A. L., Drumbo, Ontario N0J 1G0 (CA)
(72) Inventeur: DULLIEN, Francis, A., L., Kitchener, Ontario N2N 1Z4 (CA)
(86) Numéro de dépôt international: FR9700164
(87) Numéro de publication internationale: WO97027928

(56) Documents cités:
- EP-A- 0 280 160
- EP-A- 0 627 251
- WO-A-86/03252
- WO-A-94/20195
- WO-A-95/28217
- DE-A- 2 931 702
- GB-A- 2 012 611
- US-A- 3 880 626
- US-A- 3 925 205
- US-A- 4 319 891
- US-A- 5 246 472

## Description

La présente invention concerne des améliorations apportées à des dispositifs de précipitation de particules et à des dispositifs d'agglomération de particules destinés à être utilisés avec des dispositifs de précipitation de particules, ainsi que la combinaison d'un dispositif d'agglomération de particules et d'un dispositif de précipitation de particules. L'invention concerne à la fois le dispositif et la méthode mise en oeuvre.

Les demandes de brevet américaines n° 08/290.883 et 08/406.393. la seconde constituant en partie la suite de la première, déposées le 18 août 1994 et le 20 mars 1995 (cf. également le brevet britannique n° 2.264.655 B publié le 24 mai 1995, la demande de brevet britannique n° 94/07.441.6 déposée le 14 avril 1994, la demande de brevet international publiée WO 93/15.822 et la demande de brevet international WO 95/00.489) divulguent respectivement un certain nombre de formes de dispositifs de précipitation de particules destinés à séparer les particules entraînées dans un courant de gaz turbulent (généralement, mais pas nécessairement, de l'air). Il est fait référence à ces documents dans la description ci-dessous. Les particules peuvent être solides ou liquides.

Dans la description spécifique ci-après, l'un des aspects de la présente invention sera expliqué notamment pour la séparation d'un brouillard d'huile contenu dans un courant d'air turbulent, c'est-à-dire des particules d'huile ultra-fines en suspension, typiquement des gouttelettes d'une taille inférieure à 0,5 microns. On rencontre de tels courants d'air chargés de brouillard sous la forme d'émissions de machines industrielles fonctionnant à vitesse élevée.

Il faut toutefois noter que cet exemple de la présente invention relatif à la séparation de gouttelettes d'huile contenues dans un courant d'air n'est pas limitatif dans le cadre de la présente invention puisque l'invention s'applique également à la séparation (précipitation) d'autres particules liquides ou solides en suspension, par exemple des poussières, de la vapeur ou de la fumée. Une telle séparation peut être effectuée par l'un des dispositifs de précipitation divulgués dans les demandes et dans le brevet mentionnés ci-dessus, par la variante des dispositifs de précipitation précédemment divulgués décrite dans le présent document, ou par toute autre forme de dispositif de précipitation tel qu'un dispositif de précipitation électrostatique capable d'effectuer la séparation souhaitée des particules contenues dans un courant de gaz.

On a découvert que le rendement d'un dispositif de précipitation de particules est sensiblement supérieur si les particules présentent une certaine taille minimale. La séparation de particules d'une taille inférieure au micron à l'aide d'un dispositif de précipitation est moins efficace ou peut nécessiter un équipement plus coûteux. Par exemple, une séparation adéquate de particules d'une taille inférieure au micron peut nécessiter un dispositif de précipitation multi-étagé ou d'une longueur démesurée, ce qui entraînera un résultat insatisfaisant ou la nécessité de la mise en place d'un équipement excessivement coûteux.

L'un des objets de la présente invention est d'éviter ces difficultés en proposant une méthode et un appareil destinés à augmenter la taille des particules contenues dans le courant gazeux avant qu'elles n'entrent dans le dispositif de précipitation.

Cet objectif est atteint par l'agglomération des particules préalablement à leur entrée dans le dispositif de précipitation. Bien que la technique d'agglomération décrite ici soit particulièrement efficace lorsque les particules se présentent initialement sous la forme d'un brouillard, elle est également applicable à des particules présentant la forme de poussières, de vapeur ou de fumée. De plus, cette technique ne se limite pas aux particules présentant une taille initiale inférieure au micron. Quasiment toute augmentation de la taille des particules entrant dans le dispositif de précipitation est avantageuse. Aussi, lorsqu'il est dit ici que cette technique vise à l'agglomération de "fines" particules, il faut y inclure également toutes les particules qui sont trop petites pour subir une séparation rapide et efficace au sein d'un dispositif de précipitation, y compris les particules ultra-fines présentes dans un brouillard.

La présente invention peut ainsi, pour une part, être définie comme une méthode de séparation de fines particules d'un courant de gaz turbulent au cours de laquelle lesdites fines particules sont d'abord agglomérées sous forme de particules plus grandes, puis lesdites particules plus grandes sont séparées du courant gazeux par précipitation.

Ainsi, l'invention concerne un ensemble d'agglomération et de précipitation comprenant en combinaison :
(a) un dispositif d'agglomération destiné à recevoir un courant de gaz turbulent contenant de fines particules en suspension et à évacuer le courant dans lequel la majeure partie desdites fines particules se sont agglomérées sous la forme de particules plus grandes, et
(b) un dispositif de précipitation destiné à recevoir le courant sortant du dispositif d'agglomération et à séparer les particules de plus grande taille du courant gazeux, ledit dispositif de précipitation destiné à éliminer des particules contenues dans un courant gazeux, comporte au moins un canal non obstrué destiné à véhiculer le courant présentant un écoulement turbulent et une série d'objets s'étendant le long d'au moins un côté de chaque canal, lesdits objets étant disposés à intervalles rapprochés dans le sens de l'écoulement afin de définir entre eux des espaces dans lesquels pénètrent des tourbillons en provenance de chaque canal, ce qui provoque l'accumulation des particules à la surface desdits objets après le déclin des tourbillons, lesdits objets étant constitués d'au moins une plaque ondulée dont les plis présentent une profondeur supérieure au pas entre les plis.

Préférentiellement, ledit dispositif d'agglomération destiné à augmenter la taille de fines particules en suspension dans un courant de gaz turbulent, peut comporter:
(a) un conduit muni d'une ouverture d'entrée destinée à recevoir le courant et d'une sortie destinée à l'évacuation du courant, et
(b) une série de structures maillées disposées de manière sensiblement parallèle les uns par rapport aux autres et espacés le long du conduit entre l'ouverture et la sortie, chaque filtre s'étendant au travers du conduit généralement en sens transversal par rapport au courant, de telle manière que la totalité du courant traverse sensiblement tous les filtres successivement,
(c) chaque structure maillée comportant des parties solides réparties dans le conduit afin d'être heurtées par une partie des particules et des trous répartis dans le conduit pour permettre le libre passage du courant.

Avantageusement, le nombre de structures maillées peut s'élever au moins à dix.

De manière préférentielle, le nombre de structures maillées peut s'élever au moins à 30.

Les parties solides de chaque structure maillée peuvent occuper une surface inférieure à la majeure partie de la section du conduit.

Chaque structure maillée peut comporter des ensembles de fils parallèles séparés entre eux et s'étendant transversalement les uns par rapport aux autres pour former la structure maillée, ces fils formant lesdites parties solides, et des espaces entre les fils formant lesdits trous.

Le rapport de la distance entre les fils sur l'épaisseur des fils peut être approximativement compris entre dix et cinq.

Selon l'un des aspects de l'invention, chaque structure maillée peut comporter une plaque munie de trous.

L'espacement des structures maillées les unes par rapport aux autres dans le sens de l'écoulement du courant ne doit pas être inférieur à environ cinq millimètres.

Les structures maillées peuvent être constituées d'un matériau continu maillé s'étendant successivement sur des tiges transversales situées dans la partie supérieure et dans la partie inférieure du conduit.

Ladite profondeur peut être approximativement quatre fois supérieure audit pas.

Chacune desdites plaques ondulées peut être orientée de manière sensiblement verticale pour permettre aux particules accumulées à leur surface de tomber dans le fond d'une enveloppe contenant ladite ou lesdites plaque(s) et définissant ainsi ledit canal ou lesdits canaux.

Le fond de l'enveloppe peut être incliné par rapport à l'horizontale afin de favoriser l'écoulement des particules tombées des surfaces de la plaque ou des plaques ondulée(s) vers une extrémité dudit fond, puis dans un collecteur extérieur.

Lesdites particules peuvent être liquides et ledit collecteur extérieur peut comporter un piège à liquide.

Lesdites particules peuvent être solides et ledit collecteur extérieur peut comporter une trémie.

Ledit dispositif de précipitation peut comporter une cuvette qui s'étend le long du fond de l'enveloppe et qui renferme les parties inférieures desdites plaques ondulées, selon lequel un petit espace libre est aménagé entre les extrémités inférieures desdites plaques ondulées et le fond de l'enveloppe en vue de recueillir les particules solides tombées de la surface des plaques et de les guider en-dessous desdites plaques ondulées à travers une ouverture aménagée dans la cuvette pour les amener vers une fente d'évacuation de particules située à l'extrémité du fond de l'enveloppe.

Le dispositif de précipitation peut comporter un vibrateur destiné à favoriser le transfert des particules solides vers le collecteur extérieur.

La présente invention concerne également une méthode d'agglomération et de séparation de fines particules d'un courant de gaz turbulent, comportant d'abord l'agglomération desdites fines particules sous la forme de particules plus grandes, puis la séparation desdites particules plus grandes par précipitation, la séparation desdites particules étant réalisée par le passage du gaz à écoulement turbulent issu de l'agglomération dans au moins un canal comportant une série d'objets s'étendant le long d'au moins un côté de chaque canal, lesdits objets étant disposés à intervalles rapprochés dans le sens de l'écoulement afin de définir entre eux des espaces dans lesquels pénètrent des tourbillons en provenance de chaque canal, ce qui provoque l'accumulation des particules à la surface desdits objets après le déclin des tourbillons, lesdits objets étant constitués d'au moins une plaque ondulée dont les plis présentent une profondeur supérieure au pas entre les plis.

De maniéré avantageuse, l'étape d'agglomération consiste à faire passer le courant de gaz successivement à travers une série de structures maillées en vue d'amener une partie des particules à heurter des parties solides de chacune des structures maillées afin qu'elles s'agglomèrent pour former des particules plus grandes, la plupart desdites particules plus grandes étant ré-entraîhées dans le courant.

Une partie desdites particules plus grandes peuvent tomber des structures maillées.

Conformément à l'invention, l'on peut faire passer le courant successivement à travers au moins dix structures maillées.

L'on peut faire passer le courant successivement à travers au moins 30 structures maillées.

L'on peut faire passer le courant avec les particules plus grandes ré-entraînées dans un dispositif de précipitation de particules.

Selon l'un des aspects de l'invention, les fines particules peuvent être constituées d'un brouillard.

Les fines particules peuvent être constituées de poussières, de vapeur ou de fumée.
- La figure 1 est une vue d'ensemble de la disposition d'un dispositif d'agglomération et d'un dispositif de précipitation selon l'invention,
- la figure 2 est une vue latérale écorchée fragmentaire d'un dispositif d'agglomération selon un mode de réalisation de la présente invention,
- la figure 3 est une vue plane écorchée fragmentaire d'une partie du dispositif d'agglomération de la figure 2,
- la figure 4 est une vue selon la ligne 4-4 de la figure 2,
- la figure 4A est une vue fragmentaire d'une variante de la figure 4,
- la figure 5 est une vue en perspective écorchée fragmentaire d'un dispositif de précipitation selon un autre mode de réalisation de l'invention,
- la figure 6 est une élévation latérale écorchée du dispositif de précipitation de la figure 5,
- la figure 7 est une vue de dessous écorchée du dispositif de précipitation des figures 5 et 6, et
- la figure 8 est un fragment agrandi d'un élément collecteur dans le dispositif de précipitation selon les figures 5, 6 ou 7.

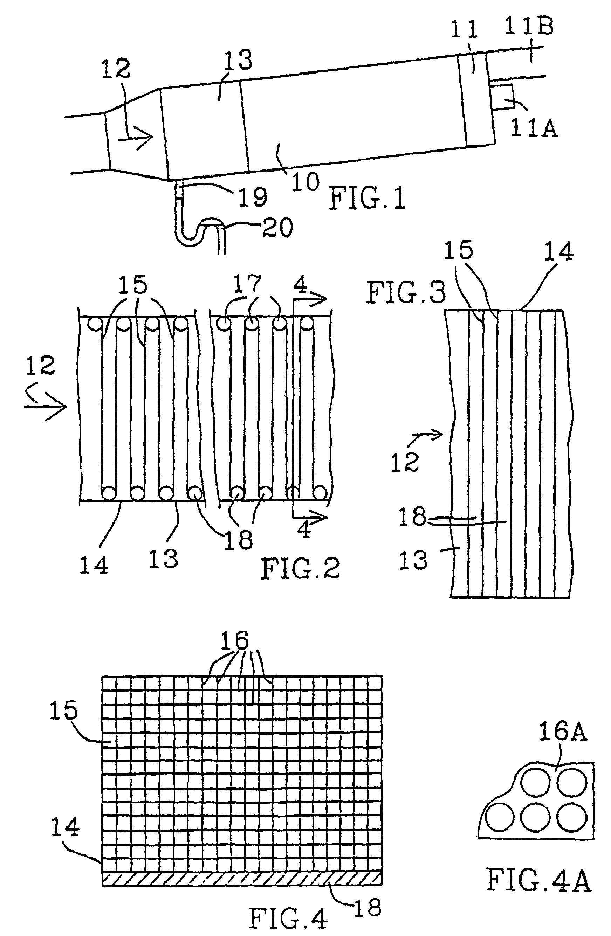

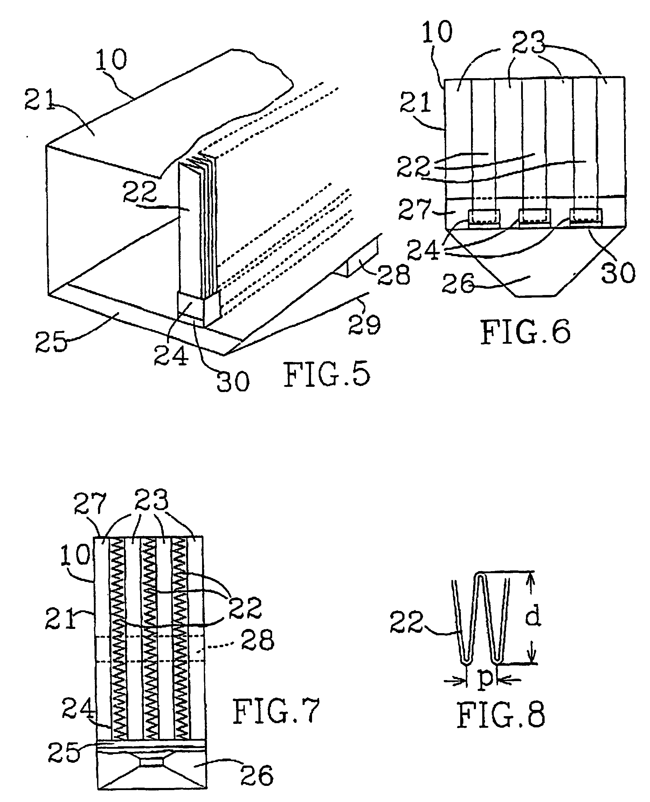

Le dispositif de précipitation de particules 10 présenté sur les figures 1 et 2 peut être l'un quelconque des dispositifs de précipitation décrits dans le brevet ou dans les demandes antérieures cités plus haut, et il peut s'agir plus particulièrement de l'un de ceux présentés dans la demande de brevet américaine n° 08/406.393 ou sa variante décrite ci-dessous en relation avec les figures 5 à 8. Il peut encore s'agir d'un dispositif de précipitation quelconque capable de séparer des particules solides ou liquides d'un courant d'air turbulent 12 aspiré dans le système par un ventilateur 11 ou par tout autre moyen. Le ventilateur comporte un moteur 11A et une sortie 11B.

Conformément à l'invention un dispositif d'agglomération 13 est disposé en amont du dispositif de précipitation 10 relativement au sens de l'écoulement gazeux. Le dispositif 13 a pour fonction d'augmenter la taille des particules entraînées ou en suspension dans le courant d'air 12 afin que les surfaces collectrices du dispositif de précipitation 10 puissent les séparer du courant de manière plus efficace.

Le système présenté sur la figure 1 a été conçu pour séparer des particules liquides d'un courant de gaz, par exemple un brouillard; c'est la raison pour laquelle il est incliné par rapport à l'horizontale et muni d'un piège à liquide 20. Le liquide accumulé dans le système (essentiellement, mais non exclusivement, au fond du dispositif de précipitation 10) s'écoule dans le fond du dispositif de précipitation 10 et du dispositif d'agglomération 13, pénètre dans un drain 19 et enfin dans un piège 20 servant de collecteur externe de liquide tout en empêchant l'air d'être aspiré dans le système à cet endroit. Des niveaux de liquide typiques dans le drain 19 et dans le piège 20 sont présentés sur la figure 1.

Lorsque le système est conçu pour séparer des particules solides, par exemple des poussières, ces dernières caractéristiques sont modifiées, comme il est décrit ci-dessous en relation avec les figures 6 et 7.

Comme on peut le voir sur les figures 2 et 3, le dispositif d'agglomération 13 peut consister en un conduit tubulaire 14 de section rectangulaire (dans un exemple spécifique, de 34 cm de long, 46 cm de large et 30 cm de haut) formant un tunnel entre une ouverture reliée à l'entrée du courant de gaz et une sortie reliée au dispositif de précipitation 10. Une série de filtres 15 espacés les uns des autres est disposée dans ce conduit 14, chacun de ces filtres s'étendant pleinement au travers du conduit dans les deux directions perpendiculaires au courant d'air 12 si bien que, théoriquement, la totalité du courant d'air doit traverser successivement tous les filtres 15. En pratique, une petite quantité du courant peut contourner lesdits filtres.

Comme le montre la figure 4, qui n'est pas à l'échelle, un filtre typique 15 consiste en deux ensembles de fils transversaux 16 formant un réseau maillé, ces fils pouvant être en un matériau approprié tel que du polyester, de la fibre de verre ou du métal. Dans un exemple typique, chaque fil 16 présente approximativement une épaisseur de 1 mm, les fils étant espacés les uns des autres d'environ 5 mm. Une méthode appropriée pour constituer cet ensemble lorsque les filtres 15 sont réalisés en un matériau flexible consiste à utiliser une très longue bande de ce matériau et à la faire passer successivement sur les tiges inférieures 17 et supérieures 18 qui s'étendent d'un côté à l'autre du conduit 14. Le diamètre de ces tiges déterminera l'espacement des filtres 15, lequel peut être compris entre approximativement 5 mm et 1 cm. Si les filtres sont disposés de manière beaucoup plus rapprochée, ils ne rempliront pas totalement leur rôle, comme il est décrit ci-dessous, car ils ne fonctionneront pas totalement comme des filtres séparés. S'ils sont plus espacés, bien qu'ils fonctionnent alors de manière efficace, on obtient un appareil d'une longueur démesurée.

Lorsque le courant d'air turbulent 12 dont on admet qu'il transporte des particules de brouillard d'huile d'une taille inférieure au micron pénètre dans l'orifice d'entrée du dispositif d'agglomération 13, il a été expérimentalement découvert qu'une petite partie de ces particules se sépare des portions du courant d'air passant de chaque côté de chaque fil 16, les particules ainsi séparées heurtant directement les fils. Sur chaque filtre 15, seule une petite fraction des particules de brouillard entrantes heurte les fils, car la plupart des particules passe librement avec le courant d'air à travers les trous présents entre les fils. Si l'on considère qu'une fraction (y) des particules de brouillard entrantes heurte les parties solides (fils) du premier filtre, la fraction restante (1 - y) passera à travers les trous. Les particules de brouillard ayant traversé les trous avec le courant d'air seront mélangées du fait de l'écoulement turbulent et présenteront une distribution sensiblement uniforme avant d'atteindre le second filtre. De plus, si nécessaire, les fils peuvent être disposés en quinconce entre des filtres adjacents afin de garantir la présence de fils directement sur le passage des particules qui ont traversé les trous du filtre précédent, avec le courant d'air. En atteignant le second filtre, la même fraction (y) de la fraction restante (1 - y) heurtera les fils. La fraction restante (transmise à travers les trous) après le second filtre est ainsi (1 - y) - y(1 - y) = (1 - y)². Après avoir traversé n filtres, la fraction des particules de brouillard d'huile initiales restant dans le courant d'air sera (1 - y)ⁿ. 0,04 représente une valeur typique pour y, c'est-à-dire 4 %. Si n = 60, par exemple, la fraction de particules restant après que le courant a traversé le dernier filtre de la série sera égale à 0,96 à la puissance 60, ce qui correspond approximativement à 0,09. Ainsi, une fraction d'environ 9 % des particules de brouillard initiales restera dans le courant d'air sortant du dispositif d'agglomération, tandis qu'environ 91 % auront heurté l'un ou l'autre des filtres.

Après impact, la plupart des substances constituant les particules ayant heurté les filtres ont tendance à être ré-entraînées dans le courant d'air. Cependant, on s'est aperçu que ces substances ré-entraînées étaient constituées de nouvelles particules, plus grandes que les particules initiales. En d'autres termes, les fines particules initiales se sont agglomérées pour donner des particules plus grandes. Certaines de ces particules agglomérées restent dans le dispositif d'agglomération et tombent au fond de l'installation, formant ainsi un liquide qui s'écoule dans le piège 20 et rejoint ainsi l'ensemble des particules recueillies. Pour obtenir ce résultat, il est important que le courant de gaz traversant le dispositif d'agglomération présente un écoulement turbulent.

Dans le cadre d'une expérience réalisée avec un brouillard d'huile produit par un nébuliseur, on a mesuré qu'environ 80 % en poids des particules de brouillard pénétrant dans le dispositif d'agglomération présentaient une taille inférieure à 0,5 micron. Lorsque ce brouillard passait directement dans un dispositif de précipitation d'une longueur d'un mètre (le dispositif d'agglomération ayant été retiré), seulement 40 % en poids des particules étaient séparés du courant d'air. Cependant, lorsque le dispositif d'agglomération était situé entre le brouillard entrant et le même dispositif de précipitation, ce dernier séparait approximativement 93 % en poids des particules de brouillard contenues dans le courant d'air. Cette même performance (récupération de 93 %) aurait pu être obtenue en théorie avec un dispositif de précipitation seul (sans dispositif d'agglomération) si la longueur du dispositif de précipitation avait été augmentée à cinq mètres. Alors que le dispositif d'agglomération utilisé seul ne permet de recueillir qu'une médiocre quantité de particules d'une taille inférieure au micron, la synergie des phénomènes se produisant au sein des dispositifs associés d'agglomération et de précipitation permet d'obtenir une méthode offrant les hautes performances requises en matière de séparation de fines particules sans nécessiter la mise en oeuvre d'un dispositif de précipitation plus long.

Afin de démontrer cette synergie, on admet que le dispositif d'agglomération de particules 13 recueille le brouillard d'huile avec un rendement fractionnaire global (a) et que le dispositif de précipitation recueille ce même brouillard avec un rendement fractionnaire global (b). En l'absence de synergie, le rendement fractionnaire E du système combiné dispositif d'agglomération + dispositif de précipitation serait E = 1 - (1 - a) (1 - b). Comme on l'a vu, le rendement fractionnaire réel E' du système combiné dispositif d'agglomération + dispositif de précipitation est largement supérieur à E, c'est-à-dire que E' >> E. Non seulement cela montre l'existence d'une synergie, mais on en voit également la cause physique, c'est-à-dire que le brouillard sortant du dispositif d'agglomération et pénétrant dans le dispositif de précipitation n'est pas le même brouillard que celui qui est entré dans le dispositif d'agglomération; il s'agit d'un brouillard formé de particules d'une taille largement supérieure, qui est recueilli par le dispositif de précipitation avec un rendement fractionnaire très supérieur b' > b à celui qui aurait pu être observé pour le brouillard initial. Ainsi, 1 - (1 - a) (1 - b') >> 1 - (1 - a) (1 - b). On a déterminé que 80 % en poids des particules du brouillard initial présentaient une taille inférieure à 0,5 micron, alors que les particules qui constituent le brouillard sortant du dispositif d'agglomération présentent une taille moyenne d'environ 4 microns. Les rendements mesurés sont les suivants : E' = 0,93, b' = 0,9, b = 0,4 et a = 0,3, d'où E = 0,58. Il est donc évident que E' >> E.

Dans les exemples mathématiques présentés ci-dessus, on a admis la mise en oeuvre de 60 filtres, 57 filtres ayant été en réalité utilisés au cours de l'expérience décrite plus haut. Le choix du nombre de filtres constituera un compromis entre une amélioration des performances (plus de filtres) et de l'économie (moins de filtres). Dans le cas où une certaine baisse des performances est admissible, ou si les particules entrantes présentent une taille supérieure au micron tout en étant des particules fines au sens où elles sont trop petites pour être séparées directement par le dispositif de précipitation, il est possible d'utiliser un nombre plus restreint de filtres. Normalement, ce nombre ne sera de préférence pas inférieur à 30, mais il peut aller jusqu'à 10, voire moins, lorsque des performances moindres sont admissibles ou que la valeur de y peut être augmentée, ou encore lorsque l'appareil doit procéder à la séparation d'un brouillard contenant des gouttelettes d'une taille sensiblement supérieure dès l'origine. Il peut donc y avoir des circonstances pour lesquelles un nombre relativement réduit de filtres peut s'avérer efficace. Il n'y a pas de nombre maximum, bien qu'un nombre supérieur à 100 serait normalement peu rentable par rapport à l'avantage qui en serait retiré. Le nombre de filtres sera donc de préférence normalement compris entre 30 et 80.

Bien que chaque filtre 15 ait été décrit jusqu'ici sous la forme d'une structure maillée constituée de fils perpendiculaires entre eux, il est également possible d'utiliser une autre structure telle qu'une plaque perforée produisant le même effet, c'est-à-dire offrant un grand nombre de parties solides destinées à être heurtées par certaines particules, tout en laissant des espaces destinés à permettre le passage du courant de gaz et des particules restantes entraînées. La figure 4A illustre une partie d'une telle plaque. Bien que la mise en oeuvre d'une plaque perforée puisse entraîner une augmentation de la perte de charge subie par le courant de gaz, elle peut également favoriser une augmentation de la valeur de y et donc permettre de réduire le nombre de filtres requis, ce qui aurait un effet positif sur le plan de la perte de charge.

Il faut noter que le terme de "filtre" utilisé dans les revendications figurant en annexe ne s'applique pas seulement à des structures maillées, mais également à des structures non maillées telles que la plaque perforée 16A présentée sur la figure 4A, à condition que celle-ci joue un rôle similaire en étant pourvue d'une surface sur laquelle sont réparties des parties solides que viennent heurter les particules et des espaces libres permettant le passage du courant gazeux. Afin de minimiser les pertes de charge, la surface constituée de parties solides représentera normalement moins de 50 % de la section totale du conduit.

Plusieurs essais de longue durée ont été réalisés avec un brouillard d'huile. A l'issue de ces essais, on a constaté que les filtres du dispositif d'agglomération et les éléments collecteurs de particules au sein du dispositif de précipitation étaient imprégnés d'huile. Le débit mis en oeuvre s'élevait à 1000 m³ par heure, et la vitesse du courant d'air était de sept mètres par seconde. On a observé une séparation très satisfaisante des gouttelettes d'huile, ainsi qu'une perte de charge acceptable de seulement cinq centimètres de colonne d'eau.

Les filtres seront de préférence orientés verticalement, le courant gazeux s'écoulant horizontalement. Cependant, ces conditions ne sont pas rigides et il est possible de s'en écarter tout en permettant au dispositif d'agglomération de fonctionner efficacement. L'inclinaison du système permettant l'écoulement des particules recueillies dans le piège 20 ne présentera pas une orientation totalement horizontale et, comme il est indiqué ci-dessous, le degré d'inclinaison peut être augmenté, par exemple à 15°, lorsque des particules solides doivent être recueillies. Il n'y aurait normalement aucun avantage à modifier l'orientation de l'écoulement d'un courant gazeux, qui est généralement horizontal, et celle des filtres, qui sont généralement disposés verticalement.

Les figures 5 à 8 présentent des détails des parties du dispositif de précipitation présentant des modifications par rapport aux constructions décrites dans le brevet et dans les demandes de brevet cités ci-avant. La théorie sur laquelle sont basées les performances de séparation de particules de la variante présentée dans les figures 5 à 8 demeure toutefois essentiellement la même que celle appliquée dans ce brevet et dans ces demandes.

Sur les figures 5 à 8, le dispositif de précipitation 10 est muni d'une enveloppe 21 formant un tunnel qui s'étend d'une ouverture recevant le courant de gaz sortant du dispositif d'agglomération ou venant directement d'un orifice d'admission, si l'utilisation d'un dispositif d'agglomération n'est pas nécessaire du fait de la taille relativement importante des particules entraînées, jusqu'à une sortie reliée au ventilateur (11).

Afin de fournir une description aussi exhaustive que possible. le dispositif de précipitation est représenté sur les figures 5 à 8 sous la forme d'un dispositif destiné à la séparation de particules solides, sans dispositif d'agglomération 13 associé. Le principe de base de la construction peut néanmoins être appliqué également à la séparation de particules liquides, pourvu qu'on lui associe un système de récupération de liquide approprié tel que les canaux d'évacuation et le piège 20 en remplacement du système de récupération de poussières présenté dans les figures 5 à 8.

Les éléments collecteurs qui s'étendent le long de l'enveloppe 21 présentent la forme de plaques ondulées 22, de préférence métalliques. Les plaques ondulées 22 s'étendent depuis la partie supérieure de l'enveloppe 21 jusqu'à proximité de la partie inférieure de l'enveloppe, laissant ainsi un espace libre permettant aux poussières recueillies de passer à travers une ouverture 30 et une fente 25 avant de pénétrer dans une trémie de stockage 26. Sur la figure 5, seule une première plaque ondulée 22 a été représentée pour des raisons de clarté. Il y aura en pratique une pluralité de telles plaques disposées côte à côte, par exemple les trois représentées sur les figures 6 et 7, disposées au travers de l'enveloppe 21 et espacées les unes par rapport aux autres afin de former des canaux 23 destinés au passage du courant gazeux, disposés entre des plaques adjacentes et entre les plaques et l'enveloppe. Comme ce mode de réalisation de l'invention est destiné à recueillir des poussières et comme les poussières ne s'écoulent pas aussi aisément qu'un liquide, l'enveloppe 21 présente une plus grande inclinaison, par exemple d'au moins 15°, par rapport à l'horizontale 29, et elle est reliée à un vibrateur 28 qui provoque l'écoulement des poussières sur le fond. Lorsque les poussières recueillies par les plaques ondulées 22 tombent au fond de l'enveloppe 21, une partie d'entre elles aurait tendance à se disperser dans les canaux ouverts 23 si elle n'était pas retenue et serait ré-entraînée dans le courant de gaz. Pour empêcher cela, les parties inférieures des plaques 22 sont enfermées dans des cuvettes 24. A l'extrémité inférieure (entrée) de l'enveloppe 21, ces cuvettes 24 présentent une ouverture 30 communiquant avec une fente 25 qui s'étend au travers du fond de l'enveloppe et communique avec une trémie 26 (non représentée sur la figure 5 pour des raisons de clarté) qui joue le rôle de collecteur externe destiné à la récupération et au transport des poussières. Lors de l'utilisation d'un dispositif d'agglomération, ce dernier peut être avantageusement logé dans la même enveloppe 21, ou dans une enveloppe présentant la même section que l'enveloppe 21, comme dans le cas de la récupération d'un brouillard présenté sur la figure 1. Dans ce cas, l'entrée du dispositif d'agglomération comportera une fente 25 plutôt qu'un orifice d'évacuation des poussières. Lors de la récupération de poussières, un espace libre est également aménagé entre les filtres et le fond du dispositif d'agglomération. Un déflecteur 27 est situé à l'extrémité supérieure (sortie) de l'enveloppe 21 pour amener le courant de gaz à quitter l'enveloppe à un niveau situé au-dessus du fond et donc pour minimiser toute tendance au ré-entraînement des poussières tombées au fond.

Afin de minimiser le ré-entraînement de particules de poussière séparées du courant gazeux par les plaques ondulées, mais qui ne sont pas encore tombées dans les cuvettes, les plis des plaques 22 doivent être serrés. c'est-à-dire former des angles de faible valeur. En d'autres termes, la profondeur de chaque pli dans le sens d (figure 8) doit être sensiblement supérieure au pas p. Un rapport d/p de l'ordre de quatre serait approprié. Bien que ce rapport puisse être modifié en fonction des circonstances, il sera maintenu à une valeur sensiblement supérieure à un pour obtenir les meilleures performances possibles.

En résumé les performances d'un dispositif de précipitation destiné à séparer des particules liquides ou solides en suspension dans un courant gazeux sont améliorées, lorsque les particules sont fines ou ultra-fines, par exemple inférieures au micron, en traitant le courant gazeux avant qu'il ne pénètre dans le dispositif de précipitation en vue de l'agglomération des fines particules sous la forme de particules d'une taille supérieure. Ce résultat est obtenu en faisant passer le courant gazeux successivement à travers une série de filtres. Certaines particules entraînées dans le courant gazeux viennent heurter les parties solides de chaque filtre et s'agglomèrent au cours du processus. Une grande partie des particules agglomérées est ensuite re-entraînée dans le courant gazeux et passe dans le dispositif de précipitation. Comme un faible pourcentage seulement des particules heurte chaque filtre, il est généralement préférable d'utiliser un nombre relativement élevé de filtres, par exemple au moins 30. Une forme de réalisation perfectionnée du dispositif de précipitation utilise des plaques ondulées formant les surfaces sur lesquelles les particules s'accumulent.

## Revendications

1. Ensemble d'agglomération et de précipitation comprenant en combinaison :
(a) un dispositif d'agglomération (13) destiné à recevoir un courant de gaz turbulent contenant de fines particules en suspension et à évacuer le courant dans lequel la majeure partie desdites fines particules se sont agglomérées sous la forme de particules plus grandes, et
(b) un dispositif de précipitation (10) destiné à recevoir le courant sortant du dispositif d'agglomération et à séparer les particules de plus grande taille du courant gazeux, ledit dispositif de précipitation destiné à éliminer des particules contenues dans un courant gazeux, comporte au moins un canal non obstrué destiné à véhiculer le courant présentant un écoulement turbulent et une série d'objets s'étendant le long d'au moins un côté de chaque canal, lesdits objets étant disposés à intervalles rapprochés dans le sens de l'écoulement afin de définir entre eux des espaces dans lesquels pénètrent des tourbillons en provenance de chaque canal, ce qui provoque l'accumulation des particules à la surface desdits objets après le déclin des tourbillons, lesdits objets étant constitués d'au moins une plaque ondulée dont les plis présentent une profondeur supérieure au pas entre les plis.

2. Ensemble d'agglomération et de précipitation selon la revendication 1, **caractérisé en ce que** ledit dispositif d'agglomération destiné à augmenter la taille de fines particules en suspension dans un courant de gaz turbulent, comporte :
(a) un conduit muni d'une ouverture d'entrée destinée à recevoir le courant et d'une sortie (11B) destinée à l'évacuation du courant, et
(b) une série de structures maillées (15) disposés de manière sensiblement parallèle les uns par rapport aux autres et espacés le long du conduit entre l'ouverture et la sortie, chaque filtre s'étendant au travers du conduit généralement en sens transversal par rapport au courant, de telle manière que la totalité du courant traverse sensiblement tous les filtres successivement,
(c) chaque structure maillée comportant des parties solides réparties dans le conduit afin d'être heurtées par une partie des particules et des trous répartis dans le conduit pour permettre le libre passage du courant.

3. Ensemble d'agglomération et de précipitation selon la revendication 2, **caractérisé en ce que** le nombre de structures maillées (15) s'élève au moins à dix.

4. Ensemble d'agglomération et de précipitation selon la revendication 2, **caractérisé en ce que** le nombre de structures maillées (15) s'élève au moins à 30.

5. Ensemble d'agglomération et de précipitation selon l'une quelconque des revendications 2, 3 ou 4, **caractérisé en ce que** les parties solides de chaque structure maillée (15) occupent une surface inférieure à la majeure partie de la section du conduit.

6. Ensemble d'agglomération et de précipitation selon l'une quelconque des revendications 2, 3 ou 4, **caractérisé en ce que** chaque structure maillée (15) comporte des ensembles de fils (16) parallèles séparés entre eux et s'étendant transversalement les uns par rapport aux autres pour former la structure maillée, ces fils formant lesdites parties solides, et des espaces entre les fils formant lesdits trous.

7. Ensemble d'agglomération et de précipitation selon la revendication 6, **caractérisé en ce que** le rapport de la distance entre les fils (16) sur l'épaisseur des fils est approximativement compris entre dix et cinq.

8. Ensemble d'agglomération et de précipitation selon l'une quelconque des revendications 2, 3 ou 4, **caractérisé en ce que** chaque structure maillée comporte une plaque munie de trous.

9. Ensemble d'agglomération et de précipitation selon l'une quelconque des revendications 2, 3 ou 4, **caractérisé en ce que** l'espacement des structures maillées (15) les unes par rapport aux autres dans le sens de l'écoulement du courant ne doit pas être inférieur à environ cinq millimètres.

10. Ensemble d'agglomération et de précipitation selon l'une quelconque des revendications 2, 3 ou 4, **caractérisé en ce que** les structures maillées sont constituées d'un matériau continu maillé s'étendant successivement sur des tiges transversales situées dans la partie supérieure et dans la partie inférieure du conduit.

11. Ensemble d'agglomération et de précipitation selon la revendication 1, **caractérisé en ce que** ladite profondeur est approximativement quatre fois supérieure audit pas.

12. Ensemble d'agglomération et de précipitation selon l'une quelconque des revendications précédentes, **caractérisé en ce que** chacune desdites plaques ondulées est orientée de manière sensiblement verticale pour permettre aux particules accumulées à leur surface de tomber dans le fond d'une enveloppe contenant ladite ou lesdites plaque(s) et définissant ainsi ledit canal ou lesdits canaux.

13. Ensemble d'agglomération et de précipitation selon la revendication 12, **caractérisé en ce que** le fond de l'enveloppe est incliné par rapport à l'horizontale afin de favoriser l'écoulement des particules tombées des surfaces de la plaque ou des plaques ondulée(s) vers une extrémité dudit fond, puis dans un collecteur extérieur.

14. Ensemble d'agglomération et de précipitation selon la revendication 13, **caractérisé en ce que** lesdites particules sont liquides et ledit collecteur extérieur comporte un piège à liquide.

15. Ensemble d'agglomération et de précipitation selon la revendication 13, **caractérisé en ce que** lesdites particules sont solides et ledit collecteur extérieur comporte une trémie.

16. Ensemble d'agglomération et de précipitation selon la revendication 15, **caractérisé en ce que** ledit dispositif de précipitation comporte une cuvette qui s'étend le long du fond de l'enveloppe et qui renferme les parties inférieures desdites plaques ondulées, selon lequel un petit espace libre est aménagé entre les extrémités inférieures desdites plaques ondulées et le fond de l'enveloppe en vue de recueillir les particules solides tombées de la surface des plaques et de les guider en-dessous desdites plaques ondulées à travers une ouverture aménagée dans la cuvette pour les amener vers une fente d'évacuation de particules située à l'extrémité du fond de l'enveloppe.

17. Ensemble d'agglomération et de précipitation selon la revendication 16, **caractérisé en ce que** le dispositif de précipitation comporte un vibrateur destiné à favoriser le transfert des particules solides vers le collecteur extérieur.

18. Méthode d'agglomération et de séparation de fines particules d'un courant de gaz turbulent, comportant d'abord l'agglomération desdites fines particules sous la forme de particules plus grandes, puis la séparation desdites particules plus grandes par précipitation, la séparation desdites particules étant réalisée par le passage du gaz à ecoulement turbulent issu de l'agglomération dans au moins un canal comportant une série d'objets s'étendant le long d'au moins un côté de chaque canal, lesdits objets étant disposés à intervalles rapprochés dans le sens de l'écoulement afin de définir entre eux des espaces dans lesquels pénètrent des tourbillons en provenance de chaque canal, ce qui provoque l'accumulation des particules à la surface desdits objets après le déclin des tourbillons, lesdits objets étant constitués d'au moins une plaque ondulée dont les plis présentent une profondeur supérieure au pas entre les plis.

19. Méthode d'agglomération et de séparation de fines particules en suspension dans un courant de gaz turbulent (12) selon la revendication 18, **caractérisée en ce que** l'étape d'agglomération consiste à faire passer le courant de gaz (12) successivement à travers une série de structures maillées (15) en vue d'amener une partie des particules à heurter des parties solides (16;16A) de chacune des structures maillées afin qu'elles s'agglomèrent pour former des particules plus grandes, la plupart desdites particules plus grandes étant ré-entraînées dans le courant (12).

20. Méthode selon la revendication 19, **caractérisée en ce qu'**une partie desdites particules plus grandes tombent des structures maillées.

21. Méthode selon la revendication 20, **caractérisée en ce que** l'on fait passer le courant successivement à travers au moins dix structures maillées.

22. Méthode selon la revendication 21, **caractérisée en ce que** l'on fait passer le courant successivement à travers au moins 30 structures maillées.

23. Méthode selon l'une quelconque des revendications 18 à 22, **caractérisée en ce que** l'on fait passer le courant avec les particules plus grandes ré-entraînées dans un dispositif de précipitation de particules (10).

24. Méthode selon l'une quelconque des revendications 18 à 22, **caractérisée en ce que** les fines particules sont constituées d'un brouillard.

25. Méthode selon l'une quelconque des revendications 18 à 23, **caractérisée en ce que** les fines particules sont constituées de poussières, de vapeur ou de fumée.

## Patentansprüche

1. Anordnung zum Agglomerieren und zum Fällen, in Kombination umfassend:
(a) eine Vorrichtung zum Agglomerieren (13), dazu vorgesehen, einen turbulenten Gasstrom zu empfangen, welcher feine Partikel in Suspension enthält und den Strom zu evakuieren, in dem der größere Teil der Feinpartikel sich in Form von größeren Partikeln agglomeriert hat, und
(b) eine Vorrichtung zum Fällen (10), dazu vorgesehen, den die Vorrichtung zum Agglomerieren verlassenden Strom zu empfangen und die Partikel größeren Umfangs des Gasstromes zu trennen, die Vorrichtung zum Fällen, die darauf ausgerichtet ist, die in dem Gasstrom enthaltenen Partikel zu entfernen, umfasst wenigstens einen nicht blockierten Kanal, der darauf ausgerichtet ist, den ein turbulentes Fließen aufweisenden Strom zu befördern, und wobei sich eine Reihe von Objekten entlang wenigstens einer Seite jedes Kanals erstreckt, wobei die Objekte in Intervallen angeordnet sind, die in der Umlaufrichtung zusammengerückt sind, um untereinander Räume zu definieren, in denen die von jedem Kanal kommenden Strudel eindringen, was die Ansammlung von Partikeln auf der Oberfläche der Objekte nach der Abnahme der Strudel hervorruft, wobei die Objekte aus wenigstens einem gewellten Blatt bestehen, dessen Falten eine Tiefe über der Schrittweite zwischen den Falten aufweisen.

2. Anordnung zum Agglomerieren und zum Fällen nach Anspruch 1, **dadurch gekennzeichnet, dass** die Vorrichtung zum Agglomerieren, die dazu vorgesehen ist, den Umfang der Feinpartikel in Suspension in einem turbulenten Gasstrom zu vergrößern, umfasst:
(a) eine mit einer Eingangsöffnung ausgerüstete Leitung, dazu vorgesehen, den Strom zu empfangen, und einen Ausgang (11B), auf die Evakuierung des Stromes ausgerichtet, und
(b) eine Reihe von Maschenstrukturen (15), die im wesentlichen parallel im Verhältnis zueinander angeordnet und entlang der Leitung zwischen der Öffnung und dem Ausgang beabstandet sind, wobei sich jeder Filter entlang der Leitung im allgemeinen in Querrichtung im Verhältnis zum Strom derart erstreckt, dass die Gesamtheit des Stroms im wesentlichen alle Filter aufeinanderfolgend durchquert,
(c) wobei jede Maschenstruktur feste Teile umfasst, die in der Leitung verteilt sind, um von einem Teil der Partikel aufgetroffen zu werden, und alle Löcher in der Leitung verteilt sind, um den freien Durchgang des Stromes zu ermöglichen.

3. Anordnung zum Agglomerieren und zum Fällen nach Anspruch 2, **dadurch gekennzeichnet, dass** die Anzahl von Maschenstrukturen (15) sich auf wenigstens 10 erhöht.

4. Anordnung zum Agglomerieren und zum Fällen nach Anspruch 2, **dadurch gekennzeichnet, dass** sich die Anzahl von Maschenstrukturen (15) auf wenigstens 30 erhöht.

5. Anordnung zum Agglomerieren und zum Fällen gemäß einem der Ansprüche 2, 3 oder 4, **dadurch gekennzeichnet, dass** die festen Teile jeder Maschenstruktur (15) eine Oberfläche kleiner als der größere Teil des Abschnittes der Leitung besetzen.

6. Anordnung zum Agglomerieren und zum Fällen gemäß einem der Ansprüche 2, 3 oder 4, **dadurch gekennzeichnet, dass** jede Maschenstruktur (15) Faltenanordnungen (16) umfasst, die parallel und voneinander getrennt sind und sich transversal im Verhältnis zueinander erstrecken, um die Maschenstruktur zu bilden, wobei die Falten die festen Teile bilden, und um Abstände zwischen den Falten zu bilden, die die Löcher bilden.

7. Anordnung zum Agglomerieren und zum Fällen nach Anspruch 6, **dadurch gekennzeichnet, dass** das Abstandsverhältnis zwischen den Falten (16) über die Dicke der Falten annähernd zwischen 10 und 5 liegt.

8. Anordnung zum Agglomerieren und zum Fällen nach einem der Ansprüche 2, 3 oder 4, **dadurch gekennzeichnet, dass** jede Maschenstruktur ein mit Löchern versehenes Blatt umfasst.

9. Anordnung zum Agglomerieren und zum Fällen nach einem der Ansprüche 2, 3 oder 4, **dadurch gekennzeichnet, dass** die Beabstandung der Maschenstrukturen (15) im Verhältnis zueinander in der Fließrichtung des Stroms nicht unterhalb von etwa fünf Millimetem sein darf.

10. Anordnung zum Agglomerieren und zum Fällen nach einem der Ansprüche 2, 3 oder 4, **dadurch gekennzeichnet, dass** die Maschenstrukturen aus einem kontinuierlich gemaschten Material bestehen, welches sich aufeinanderfolgend über im oberen Teil und im unteren Teil der Leitung angeordnete transversale Stangen erstreckt.

11. Anordnung zum Agglomerieren und zum Fällen nach Anspruch 1, **dadurch gekennzeichnet, dass** die Tiefe annähernd viermal über der Schrittweite liegt.

12. Anordnung zum Agglomerieren und zum Fällen nach einem der vorhergehenden Ansprüche, **dadurch gekennzeichnet, dass** jedes der gewellten Blätter in im wesentlichen vertikaler Weise ausgerichtet ist, um es den an deren Oberfläche angesammelten Partikeln zu ermöglichen, in den Boden einer Hülle, welche das Blatt oder die Blätter enthält, zu fallen, und welche so den oder die Kanäle definiert.

13. Anordnung zum Agglomerieren und zum Fällen nach Anspruch 12, **dadurch gekennzeichnet, dass** der Boden der Hülle im Verhältnis zur Horizontalen geneigt ist, um das Fließen der auf die Oberfläche des gewellten Blattes oder der gewellten Blätter fallenden Partikel zu einem Ende des Bodens und dann in den äußeren Sammler zu begünstigen.

14. Anordnung zum Agglomerieren und zum Fällen nach Anspruch 13, **dadurch gekennzeichnet, dass** die Partikel flüssig sind und der äußere Sammler eine Flüssigkeitsfalle umfasst.

15. Anordnung zum Agglomerieren und zum Fällen nach Anspruch 13, **dadurch gekennzeichnet, dass** die Partikel fest sind und der äußere Sammler ein Sieb umfasst.

16. Anordnung zum Agglomerieren und zum Fällen nach Anspruch 15, **dadurch gekennzeichnet, dass** die Vorrichtung zum Fällen einen Kübel umfasst, der sich entlang des Bodens der Hülle erstreckt und der die unteren Teile der gewellten Blätter einschließt, gemäß dem ein kleiner Freiraum zwischen den unteren Enden der gewellten Blätter und dem Boden der Hülle im Hinblick darauf eingerichtet ist, die festen auf die Oberfläche der Blätter gefallenen Partikel zu sammeln und sie unter die gewellten Blätter entlang einer in dem Kübel eingerichteten Öffnung zu leiten, um sie zu einem Spalt zur Entfernung der Partikel zu führen, der am Ende des Bodens der Hülle angeordnet ist.

17. Anordnung zum Agglomerieren und zum Fällen nach Anspruch 16, **dadurch gekennzeichnet, dass** die Vorrichtung zum Fällen einen Vibrator umfasst, der darauf ausgerichtet ist, den Übergang der festen Partikel zum äußeren Sammler zu begünstigen.

18. Verfahren zum Agglomerieren und zur Trennung von feinen Partikeln eines turbulenten Gasstromes, umfassend zuerst das Agglomerieren der Feinpartikel in Form von größeren Partikeln und die Trennung der größeren Partikel durch Fällen, wobei die Trennung der Partikel durch Durchgang des Gases beim turbulenten Fließen aus der Agglomerierung in wenigstens einem Kanal durchgeführt wird, der eine Reihe von Objekten umfasst, welche sich entlang wenigstens einer Seite jedes Kanals erstrecken, wobei die Objekte in Intervallen angeordnet sind, die in Fließrichtung zusammengerückt sind, um zwischeneinander Räume zu definieren, in denen Strudel aus jedem Kanal eindringen, was die Ansammlung der Partikel an der Oberfläche der Objekte nach der Abnahme der Strudel hervorruft, wobei die Objekte aus wenigstens einem gewellten Blatt bestehen, dessen Falten eine Tiefe oberhalb der Schrittweite zwischen den Falten aufweisen.

19. Verfahren zum Agglomerieren und zur Trennung von feinen Partikeln in Suspension in einem turbulenten Gasstrom (12) nach Anspruch 18, **dadurch gekennzeichnet, dass** die Stufe zum Agglomerieren darin besteht, den Gasstrom (12) aufeinanderfolgend entlang einer Reihe von Maschenstrukturen (15) in Hinblick darauf passieren zu lassen, einen Teil der Partikel dahin zu führen auf feste Teile (16; 16A) jeder der Maschenstrukturen aufzutreffen, damit sie sich Agglomerieren um größere Partikel zu bilden, wobei der Hauptteil der größeren Partikel in dem Strom (12) wieder mitgezogen wird.

20. Verfahren nach Anspruch 19, **dadurch gekennzeichnet, dass** ein Teil der größeren Partikel von den Maschenstrukturen fällt.

21. Verfahren nach Anspruch 20, **dadurch gekennzeichnet, dass** man den Strom aufeinanderfolgend entlang von wenigstens 10 Maschenstrukturen passieren lässt.

22. Verfahren nach Anspruch 21, **dadurch gekennzeichnet, dass** man den Strom aufeinanderfolgend entlang von wenigstens 30 Maschenstrukturen passieren lässt.

23. Verfahren nach einem der Ansprüche 18 bis 22, **dadurch gekennzeichnet, dass** man den Strom mit den größeren, wieder mitgezogenen Partikeln in der Vorrichtung zum Fällen von Partikeln (10) passieren lässt.

24. Verfahren nach einem der Ansprüche 18 bis 22, **dadurch gekennzeichnet, dass** die Feinpartikel aus einem Nebel bestehen.

25. Verfahren nach einem der Ansprüche 18 bis 23, **dadurch gekennzeichnet, dass** die Feinpartikel aus Dampf- oder Rauchstößen bestehen.

## Claims

1. Agglomerating and precipitating unit comprising in combination:
(a) an agglomerating device (13) designed to receive a turbulent stream of gas containing fine particles in suspension and to discharge the stream in which the majority of said fine particles are agglomerated in the form of larger particles, and
(b) a precipitating device (10) designed to receive the stream leaving the agglomerating device and to separate the particles of larger size from the gaseous stream, said precipitating device being designed to eliminate particles contained in a gaseous stream and comprising at least one unobstructed channel designed to convey the stream exhibiting a turbulent flow and a series of objects extending along at least one side of each channel, said objects being disposed at short intervals in the direction of flow in order to define between them spaces into which eddies coming from each channel penetrate, causing accumulation of the particles on the surface of said objects after the decline of the eddies, said objects being constituted by at least one corrugated plate the folds of which exhibit a depth greater than the spacing between the folds.

2. Agglomerating and precipitating unit according to claim 1, ***characterised in that*** said agglomerating device designed to increase the size of fine particles in suspension in a turbulent stream of gas comprises:
(a) a passage provided with an inlet opening designed to receive the stream and an outlet (11B) designed to discharge the stream, and
(b) a series of mesh structures (15) disposed substantially parallel to one another and spaced along the passage between the opening and the outlet, each filter extending across the passage generally in the transverse direction in relation to the stream, such that the entirety of the stream passes substantially through all the filters in succession,
(c) each mesh structure comprising solid portions distributed in the passage in order to be struck by a portion of the particles and holes distributed in the passage to allow free passage of the stream.

3. Agglomerating and precipitating unit according to claim 2, ***characterised in that*** the number of mesh structures (15) is at least ten.

4. Agglomerating and precipitating unit according to claim 2, ***characterised in that*** the number of mesh structures (15) is at least 30.

5. Agglomerating and precipitating unit according to any one of claims 2, 3 or 4, ***characterised in that*** the solid portions of each mesh structure (15) occupy a surface area less than the majority of the section of the passage.

6. Agglomerating and precipitating unit according to any one of claims 2,3 or 4, ***characterised in that*** each mesh structure (15) comprises sets of parallel wires (16) separated from one another and extending transversely in relation to one another to form the mesh structure, these wires forming said solid portions, and spaces between the wires forming said holes.

7. Agglomerating and precipitating unit according to claim 6, ***characterised in that*** the ratio of the distance between the wires (16) to the thickness of the wires lies roughly between ten and five.

8. Agglomerating and precipitating unit according to any one of claims 2, 3 or 4, ***characterised in that*** each mesh structure comprises a plate provided with holes.

9. Agglomerating and precipitating unit according to any one of claims 2, 3 or 4, ***characterised in that*** the spacing of the mesh structures (15) relative to one another in the direction of flow of the stream must not be less than approximately five millimetres.

10. Agglomerating and precipitating unit according to any one of claims 2, 3 or 4, ***characterised in that*** the mesh structures are constituted by a continuous mesh material extending successively over transverse rods situated in the upper portion and in the lower portion of the passage.

11. Agglomerating and precipitating unit according to claim 1, ***characterised in that*** said depth is approximately four times greater than said spacing.

12. Agglomerating and precipitating unit according to any one of the preceding claims, ***characterised in that*** each of said corrugated plates is oriented substantially vertically to allow the particles accumulating on their surface to fall into the bottom of a casing containing said plate or plates and thus defining said channel or channels.

13. Agglomerating and precipitating unit according to claim 12, ***characterised in that*** the bottom of the casing is inclined in relation to the horizontal in order to favour the flow of the particles which have fallen from the surfaces of the corrugated plate or plates towards one end of said bottom, then into an external collector.

14. Agglomerating and precipitating unit according to claim 13, ***characterised in that*** said particles are liquid and said external collector comprises a liquid trap.

15. Agglomerating and precipitating unit according to claim 13, ***characterised in that*** said particles are solid and said external collector comprises a hopper.

16. Agglomerating and precipitating unit according to claim 15, ***characterised in that*** said precipitating device comprises a tray which extends along the bottom of the casing and encloses the lower portions of said corrugated plates, according to which a small free space is formed between the lower ends of said corrugated plates and the bottom of the casing in order to collect the solid particles which have dropped from the surface of the plates and to guide them below said corrugated plates through an opening formed in the tray to convey them towards a discharge slot for particles situated at the end of the bottom of the casing.

17. Agglomerating and precipitating unit according to claim 16, ***characterised in that*** the precipitating device comprises a vibrator designed to favour the transfer of the solid particles to the external collector.

18. Method for agglomerating and separating fine particles from a turbulent stream of gas, comprising firstly agglomeration of said find particles in the form of larger particles, then separation of said larger particles by precipitation, the separation of said particles being carried out by passing the gas in a state of turbulent flow from the agglomeration into at least one channel comprising a series of objects extending along at least one side of each channel, said objects being disposed at short intervals in the direction of flow in order to define between them spaces into which pass eddies coming from each channel, which causes accumulation of the particles on the surface of said objects after the decline of the eddies, said objects being constituted by at least one corrugated plate the folds of which exhibit a depth which is greater than the spacing between the folds.

19. Method for agglomerating and separating fine particles in suspension in a turbulent stream of gas (12) according to claim 18, ***characterised in that*** the agglomerating step consists in passing the stream of gas (12) successively through a series of mesh structures (15) with a view to causing a portion of the particles to strike solid portions (16; 16A) of each of the mesh structures in order that they agglomerate to form larger particles, the majority of said larger particles being re-entrained in the stream (12).

20. Method according to claim 19, ***characterised in that*** a portion of said larger particles falls from the mesh structures.

21. Method according to claim 20, ***characterised in that*** the stream is successively passed through at least ten mesh structures.

22. Method according to claim 21, ***characterised in that*** the stream is successively passed through at least 30 mesh structures.

23. Method according to any one of claims 18 to 22, ***characterised in that*** the stream with the re-entrained larger particles is passed through a particles precipitating device (10).

24. Method according to any one of claims 18 to 22, ***characterised in that*** the fine particles are constituted by a mist.

25. Method according to any one of claims 18 to 23, ***characterised in that*** the fine particles are constituted by dust, steam or smoke.
